# EUROPEAN PATENT SPECIFICATION

(11) **EP 1 767 399 B1**
(45) Date of publication and mention of the grant of the patent: **09.07.2008**
(21) Application number: 06380138.5
(22) Date of filing: 25.05.2006
(51) Int. Cl.: B60Q 1/04, B60Q 1/26

(54) **Headlight assembly system in automotive vehicles**
System zur Montage eines Scheinwerfers in einem Fahrzeug
Système de montage d'un phare sur un véhicule automobile

(30) Priority: 21.09.2005 ES 200502076 U
(43) Date of publication of application: 28.03.2007
(73) Proprietor: Seat, S.A., 08040 Barcelona (ES)
(72) Inventor: Elvira Avila, Carlos c/o Seat, S.A., 08760 Martorell Barcelona (ES); Collado Gimenez, Blay c/o Seat, S.A., 08760 Martorell Barcelona (ES)
(74) Representative: Carvajal y Urquijo, Isabel

(56) References cited:
- DE-A1- 3 718 546
- DE-C1- 19 625 976
- ES-U- 1 057 029
- US-A- 3 174 713

## Description

### Field of the Invention

The present invention relates to a headlight assembly system in automotive vehicles, especially for the assembly of auxiliary headlights on the front of automotive vehicles, be it in the body or the bumper.

### Background to the Invention

The auxiliary headlights, for example anti-fog lights, are generally assembled in a cavity or opening formed in the front of the body or in the bumper, and are usually fixed by means of screws or clamps.

This fixing system has drawbacks in the assembly, given that it requires an exact positioning of the headlights in the cavity of the opening to obtain the coincidence between the fixing elements. Furthermore, in the case of fixing by means of screws, there is a risk that these can loosen, due to the vibrations during the running of the vehicle.

In ES-U- 200400751 of the same applicants a structure is already described for the assembly of vehicle headlights not requiring clamps or screws. This structure includes two ring-shaped guides projecting outwardly from the casing of the headlight and a same number of flanges projecting inwardly from the contour of the structure or cavity in which the headlight is assembled, also in diametrically opposing positions, which guides and flanges are couplable to one another and determine a position for introducing the casing of the headlight in the opening. From this position and by means of rotation of the casing, the guides are coupled on the flanges until reaching a locking position of the casing, a position being defined by mutual anchoring means that said guides and flanges have. The guides projecting from the casing consist of pairs of ring-shaped walls running throughout the two diametrically opposing sections of the outer surface of the casing, these walls being located near each other for determining two channels in which other flanges penetrate projecting from the contour of the cavities in which the headlights are assembled on introducing and rotating said headlights until their assembly position.

Although with this system the fixing screws and clamps are removed, the assembly of the headlight requires a relatively large effort due to the friction between the flanges projecting from the contour of the cavities and the walls defining the guides of the casing. Furthermore, for obtaining a perfect holding of the headlight it is necessary to reduce the tolerances between the flanges of the opening and the walls determining the guides.

### Description of the Invention

The present invention has the object of solving the drawbacks set forth by means of an assembly system of the type set forth, not requiring fixing clamps or screws and demanding virtually no effort for obtaining a coupling and assembly of the headlight in the cavity or opening.

Furthermore the fixing system allows the tolerances between the guides and flanges to be less critical, without this being detrimental to the headlight assembly conditions.

A further advantage of the system of the invention is that the assembly of the headlight is obtained by means of less travel in the rotation thereof, from the introduction position to the final coupling position.

The assembly system of the invention is of the type set forth, consisting of two guide and flange assemblies located in diametrically opposing positions. In the system of the invention each assembly of couplable guides and flanges consists of a group of coplanar tabs projecting from the edge of the opening in a position perpendicular to the axis of said opening, and of a group of tabs projecting from the casing of the headlight and being located in two planes perpendicular to the axis of said casing, which planes can be separated from one another by a distance approximately equal to the thickness of the tabs of the opening. One of the tabs of the casing has a ring-shaped extension which is located on the casing and has a slight transverse inclination, the free transverse edge of this extension being opposite to and resting on one of the tabs of the opening in the coupling position between guides and flanges for defining the anchoring means of the headlight.

In each of the groups of tabs of the casing, the tabs located on both planes are of different heights. The tabs of lesser height are intended to be introduced axially through the tabs of the opening, whereas the tabs of greater height of the casing collide with the wall of the opening, preventing the axial passage thereof to limit the penetration of the headlight in the opening or cavity.

Each group of tabs of the casing can consist of three tabs, two end ones located in the same plane and being of greater height and a central one of lesser height located in a different plane, the latter being the carrier of the afore-mentioned ring-shaped extension. Moreover, each group of tabs of the opening can include two tabs, separated from one another by a distance approximately equal to the length of the inclined extension of the central tab of the casing.

Each group of tabs of the casing can include a fourth tab located after the inclined extension of the central tab, this fourth tab being of the same height as said central tab.

### Brief Description of the Drawings

With the aim of better understanding the features of the system of the invention, a more detailed description thereof with the aid of the attached drawings is provided below, showing a non-limiting embodiment.

In the drawings:
Figure 1 shows a perspective view of the casing of a headlight.
Figure 2 shows a front elevation view of the casing of the headlight in Figure 1.
Figure 3 shows a front elevation view of the opening formed in the body or bumper for the assembly of the headlight.
Figure 4 shows a partial sectional view of the edge of the opening or cavity in which the headlight is fixed, taken according to section line IV-IV of Figure 3.
Figure 5 shows a front elevation view of the casing in Figures 1 and 2 inside the opening in Figure 3, in the introduction position of the casing.
Figure 6 shows a front elevation view similar to Figure 5, showing the casing of the headlight rotated until its coupling and fixing position.
Figure 7 shows a partial development of the side surface of the casing and of the edge of the opening with the guides and flanges of both coupled.

### Detailed Description of an Embodiment

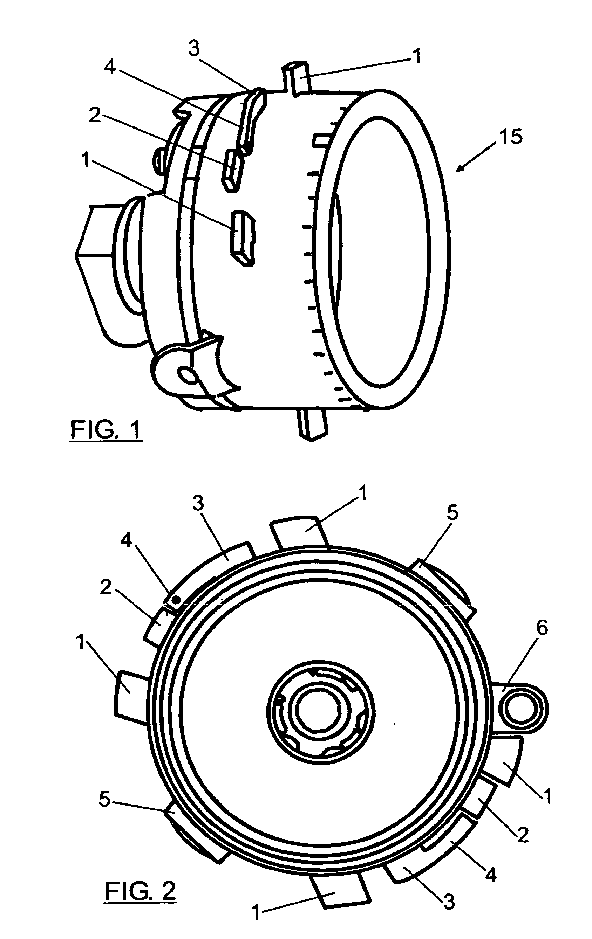

Figures 1 and 2 illustrate a simplified form of the casing of a headlight, from which the side surface of which project two groups of tabs, each of which includes two end tabs referenced with number 1, located in the same plane, and two intermediate tabs referenced with numbers 2 and 3 and being located in a different plane both planes being perpendicular to the axis of the casing of the headlight. Tab 3 has a ring-shaped extension 4, which is separated at its inner edge from the surface of the casing and is transversally inclined, as can best be seen in Figure 1. Furthermore, the casing has outer elements 5 and 6 known in and of themselves for the fixing of the rear body, carrier of the reflector and the lighting means.

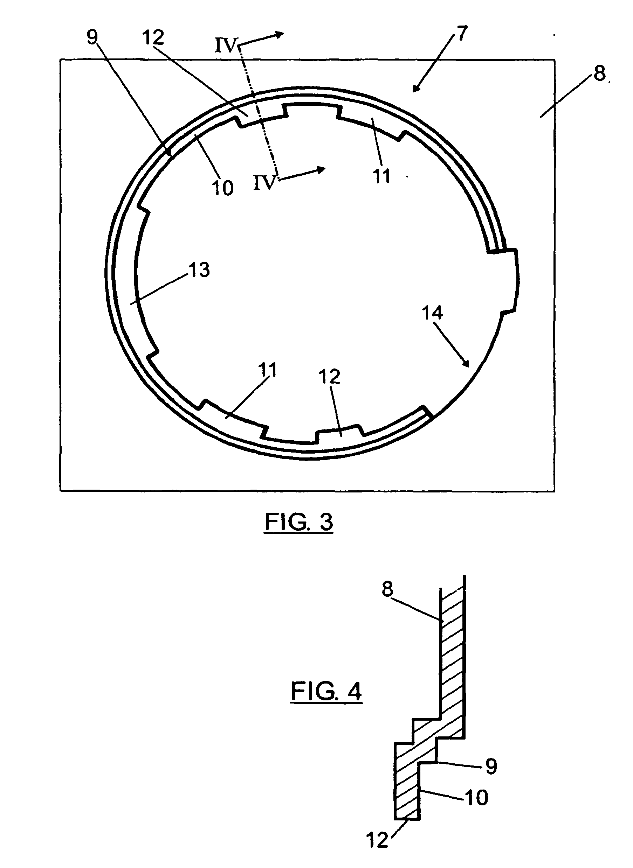

The headlight shown in Figures 1 and 2 is fixed on an opening or cavity 7 which is formed in the sheet of the body of the bumper 8, as shown in Figure 3. This opening forms a step 9 on the contour limited internally by a wing 10, projecting from which as an extension are two groups of tabs 12 and 12 located in the same plane and in diametrically opposing positions. Furthermore, the wing 9 has an area 13 of greater width opposite to which the step 9 is interrupted by the recess 14.

The two planes in which tabs 1, 2 and 3 of the casing of the headlight of the figures 1 and 2 are located are separated by a distance approximately the same as the thickness of the tabs 11 and 12 of the opening 7.

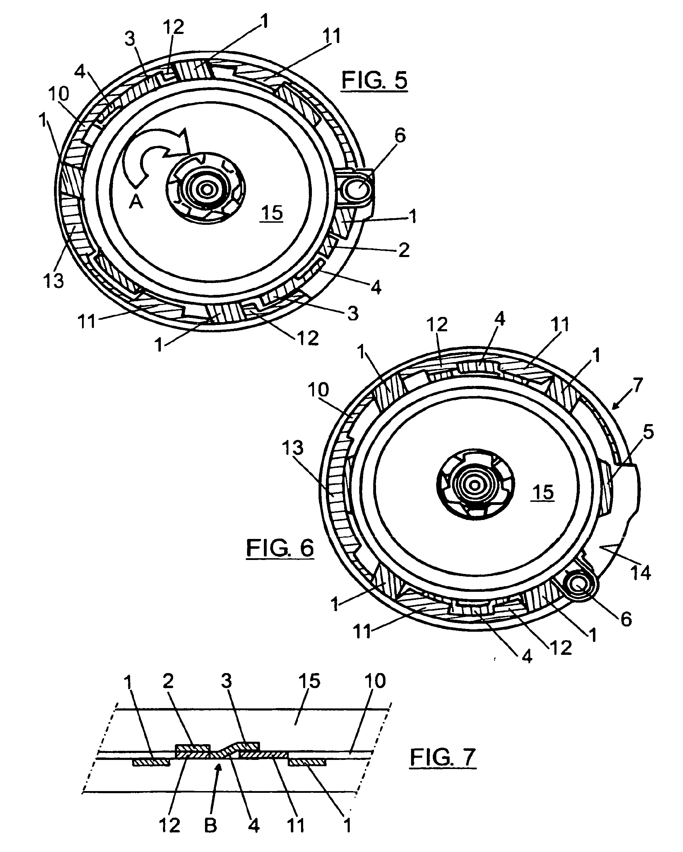

With the described constitution, for assembling the headlight 15 of Figures 1 and 2 in the opening 7 of Figure 3, said headlight is introduced through the opening until the tabs 1 of greater height rest against the wing 10 of the opening 7, tabs 2 and 3 of one of the groups of tabs of the headlight being opposite to the section of wing 10 limited between tabs 12 and 13, whereas tabs 2 and 3 of the headlight of the diametrically opposing group are opposite to the notch 14, such that tabs 2 and 3 of the two groups of the headlight are located behind tabs 11 and 12 of the opening. This position is shown in Figure 5 and from this position, the headlight 15 is rotated in the direction of arrow A until tabs 2 and 3 are respectively located behind tabs 11 and 12 of the opening and the inclined section 4 of tab 3 is located between tabs 11 and 12, as shown in Figures 6 and 7.

In this situation, tab 2 of the headlight is located behind tab 12 of the opening and tab 3 is located behind tab 11. The inclined section 4 is located between tabs 11 and 12 of the opening, but with the transverse edge in opposite to and resting on tab 12, such that it will prevent the rotation of the headlight in the direction opposite to arrow A of Figure 5, defining the anchoring means in the opening or cavity 7.

For removing the headlight it will be necessary to press section 4 of tab 3 of the headlight in the direction of arrow B of Figure 7 until moving it behind tab 12 of the opening, at which time the anchoring means are limited and the headlight can be rotated in the direction opposite to arrow A of Figure 5.

In Figures 5 and 6, tabs 1, 2 and 3, as well as the extension of the latter in a vertical direction, have been underlined whereas the wing and tabs of the opening 7 have been underlined in a horizontal direction to more clearly show the introduction positions of the headlight in the opening 7, shown in Figure 5, and the locking position of the headlight inside the opening 7, Figure 6.

The tabs 2 and 3 of the casing 15 of the headlight will be of a height such that they pass through the edge of the wing 10 of the opening, whereas tabs 1 of the casing 15 of the headlight will be of greater height such that they are supported on said wing to limit the penetration of the headlight in the opening 7 at the time of its assembly.

The step 9 acts as a seating of the casing, limiting its penetration in the opening. However, the opening 7 could lack this step, because these tabs 1 of greater height would limit the penetration of the casing on colliding with the edge of the opening.

## Claims

1. A headlight assembly system in automotive vehicles by means of ring-shaped guides projecting outwardly from the casing of the headlight (15) and the same number of flanges projecting inwardly from the contour of the opening or cavity in which the headlight is assembled, also being in a diametrically opposing positions, which guides and flanges are coupled to one another and determine an introduction position of the casing of the headlight in the opening, from which and by means of rotation of said casing, the guides are coupled on the flanges until reaching a locking position of the casing, defined by mutual anchoring means which said guides and projections have, **characterized in that** each assembly of couplable guides and flanges consists of a group of coplanar tabs (11,12) projecting from the edge of the opening in a position perpendicular to the axis of said opening, and of a group of tabs (1,2,3) projecting from the casing of the headlight and located in two planes perpendicular to the axis of said casing, separated from one another by a distance approximately equal to the thickness of the tabs (11,12) of the opening; one of the tabs (3) of the casing having a ring-shaped extension (4) separated from the casing and transversally inclined, the free transverse edge of which is opposite to and resting on one of the tabs of the opening in the coupling position between guides and flanges for defining the anchoring means.

2. A system according to claim 1, **characterized in that** in each group of tabs of the casing the tabs located in both planes are of different heights, the tabs of lesser height capable of being introduced axially through the tabs of the opening, whereas the tabs (1) of the casing of greater height of the casing collide with the wall of the opening, preventing the axial passage thereof.

3. A system according to claim 1, **characterized in that** each group of tabs of the casing includes at least three tabs, two end ones (1) located in the same plane and of greater height and a central one (3) of lesser height located in a different plane, this being the carrier of the afore-mentioned ring-shaped extension (4), whereas each group of tabs (11,12) of the opening includes two tabs separated from one another by a distance approximately equal to the length of the inclined extension (4) of the central tab (3) of the casing.

4. A system according to claim 3, **characterized in that** each group of tabs of the casing further includes a fourth tab (2) located after the inclined extension (4) of said central tab (3) and being of the same height as said central tab (3).

## Patentansprüche

1. Scheinwerfer-Montagesystem in Kraftfahrzeugen, mittels ringförmiger Führungen, weiche nach außen von dem Gehäuse des Scheinwerfers (15) vorspringen, und derselben Anzahl an Flanschen, weiche nach innen, von dem Umriss der Öffnung oder Vertiefung vorspringen, in welcher der Scheinwerfer montiert wird, wobei sie sich außerdem in einer diametral gegenüberliegenden Position befinden, wobei die Führungen und Flansche aneinander angekoppelt werden und eine Einführungsposition des Gehäuses des Scheinwerfers in die Öffnung bestimmen, von welcher aus, und mittels Rotation des Gehäuses, die Führungen an die Flansche angekoppelt werden, bis eine Sperrposition des Gehäuses erreicht ist, weiche durch gegenseitige Verankerungsmittel definiert ist, welche die Führungen und Vorsprünge aufweisen, **dadurch gekennzeichnet, dass** jede Einheit koppelbarer Führungen und Flansche, aus einer Gruppe koplanarer Laschen (11, 12) besteht, welche von dem Rand der Öffnung vorspringen, in einer Position normal zu der Achse der Öffnung, und einer Gruppe von Laschen (1, 2, 3)" welche von dem Gehäuse des Scheinwerfers vorspringen und sich in zwei Ebenen, normal zu der Achse des Gehäuses, befinden, getrennt voneinander durch eine Entfernung, annähernd gleich der Dicke der Laschen (11, 12) der Öffnung; wobei eine der Laschen (3) des Gehäuses eine Verlängerung (4) in Ringrichtung aufweist, welche von dem Gehäuse getrennt und quer geneigt ist, wobei der freie Querrand derselben einer der Laschen der Öffnung gegenüberliegt und darauf; in der Koppelposition zwischen Führungen und Flanschen, aufliegt, um die Verankerungsmittel zu definieren.

2. System nach Anspruch 1, **dadurch gekennzeichnet, dass**, in jeder Gruppe von Laschen des Gehäuses, die Laschen, weiche sich in den beiden Ebenen befinden, von unterschiedlicher Höhe sind, wobei die Laschen von geringerer Höhe axial durch die Laschen der Öffnung eingeführt werden können, während die Laschen (1) des Gehäuses, von größerer Höhe, gegen die Wand der Öffnung stoßen, was das axiale Hindurchgehen derselben verhindert.

3. System nach Anspruch 1, **dadurch gekennzeichnet, dass** jede Gruppe von Laschen des Gehäuses wenigstens drei Laschen aufweist, wobei zwei äußere (1) sich in derselben Ebene befinden und von größerer Höhe sind, und eine mittlere (3), von geringerer Höhe, sich in einer anderen Ebene befindet, wobei diese die tragende der vorgenannten Verlängerung (4) in Ringrichtung ist, während jede Gruppe von Laschen (11, 12) der Öffnung zwei Laschen umfasst, welche voneinander durch eine Entfernung getrennt, sind, annähernd gleich .der Länge der geneigten Verlängerung (4) der mittleren Lasche (3) des Gehäuses.

4. System nach Anspruch 3, **dadurch gekennzeichnet, dass** jede Gruppe von Laschen des Gehäuses ferner eine vierte Lasche (2) umfasst, welche sich folgend auf die geneigte Verlängerung der vorgenannten mittleren Lasche befindet und von gleicher Höhe ist wie die mittlere Lasche (3).

## Revendications

1. Système d'assemblage de phare dans des véhicules automobiles à l'aide de guides de forme annulaire se projetant vers l'extérieur depuis le boîtier du phare (15) et d'un même nombre de collerettes se projetant vers l'intérieur depuis le contour de l'ouverture ou de la cavité dans laquelle le phare est assemblé, se trouvant également dans des positions diamétralement opposées, lesdits guides et lesdites collerettes étant couplés les uns aux autres et déterminant une position d'introduction du boîtier du phare dans l'ouverture, à partir de laquelle, à l'aide d'une rotation dudit boîtier, les guides sont couplés aux collerettes jusqu'à atteindre une position de blocage du boîtier, définie par des moyens d'ancrage mutuels que lesdits guides et lesdites collerettes possèdent, **caractérisé en ce que** chaque assemblage de guides et de collerettes pouvant être couplés se compose d'un groupe de languettes coplanaires (11, 12) se projetant depuis le bord de l'ouverture dans une position perpendiculaire à l'axe de ladite ouverture, et d'un groupe de languettes (1, 2, 3) se projetant depuis le boîtier du phare et situées sur deux plans perpendiculaires à l'axe dudit boîtier, séparées l'une de l'autre par une distance approximativement égale à l'épaisseur des languettes (11, 12) de l'ouverture ; l'une des languettes (3) du boîtier ayant, une extension de forme annulaire (4) séparée du boîtier et inclinée de manière transversale, dont le bord transversal libre est opposé à et repose sur l'une des languettes de l'ouverture dans la position de couplage entre les guides et les collerettes afin de définir les moyens d'ancrage.

2. Système selon la revendication 1, **caractérisé en ce que**, dans chaque groupe de languettes du boîtier, les languettes situées sur les deux plans sont de hauteurs différentes, les, languettes les moins hautes étant capables d'être, introduites axialement dans : les languettes de l'ouverture, tandis que les languettes (1) du boîtier les plus hautes entrent en collision avec la paroi de l'ouverture, empêchant le passage axial de celles-ci.

3. Système selon la revendication 1, **caractérisé en ce que** chaque groupe de languettes du boîtier comprend au moins trois languettes, deux languettes d'extrémité (1) situées sur le même plan et ayant une hauteur plus importante, et une languette centrale (3) ayant une hauteur moins élevée située sur un plan différent, celle-ci étant le support de l'extension de forme annulaire susmentionnée (4), tandis que chaque groupe de languettes (11, 12) de l'ouverture comprend deux languettes séparées l'une de l'autre par une distance approximativement égale à la longueur de l'extension inclinée (4) de la languette centrale (3) du boîtier.

4. Système selon la revendication 3, **caractérisé en ce que** chaque groupe de languettes du boîtier comprend en outre une quatrième languette (2) située après l'extension inclinée de ladite languette centrale (3) et ayant la même hauteur que ladite languette centrale (3).
